# EUROPÄISCHE PATENTANMELDUNG

(11) **EP 2 863 141 A1**
(43) Veröffentlichungstag der Anmeldung: **22.04.2015**
(21) Anmeldenummer: 13188853.9
(22) Anmeldetag: 16.10.2013
(51) Int. Cl.: F24F 13/20, A62C 2/06, F16B 12/20, F16L 5/04, F24F 13/02

(54) **Kanalgehäuse für Luftkanal und Verfahren zu dessen Montage**

(71) Anmelder: TROX GmbH, 47506 Neukirchen-Vluyn (DE)
(72) Erfinder: Beutelt, Björn, 47228 Duisburg (DE); Weck, Ronny, 46519 Alpen (DE)
(74) Vertreter: DR. STARK & PARTNER

(57) **Zusammenfassung**

Die Erfindung betrifft ein Verfahren zur Montage eines Gehäuses zur Verwendung als Kanalabschnitt oder als Verkleidung eines Teilbereichs einer raumlufttechnischen Be- und/oder Entlüftungsanlage und/oder einer Entrauchungsanlage, wie zum Beispiel einer Entrauchungsklappe, aus zumindest zwei miteinander zu verbindenden Wandungsbereichen, wobei jeder Wandungsbereich eine Innenfläche, eine Außenfläche und die Innenfläche und die Außenfläche verbindende Kantenflächen aufweist und wobei im miteinander verbundenen Zustand der beiden Wandungsbereiche diese mit jeweils einer ihrer Flächen stumpf aneinander angrenzen. Um ein Verfahren zur Montage eines Gehäuses anzugeben, das einfacher ist und auch einen geringeren Materialverlust hat, soll bei zumindest einer Verbindung einer der beiden zu verbindenden Wandungsbereiche zumindest ein über die stumpf an die Fläche des anderen Wandungsbereichs angrenzende Fläche vorstehendes, insbesondere stiftartig ausgebildetes, Kontaktelement aufweisen, das im Bereich seines freien Endes einen orthogonal zu den stumpf aneinander angrenzenden Flächen der zu verbindenden Wandungsbereiche hintergreifbaren Kontaktbereich aufweist, und der andere zu verbindende Wandungsbereich einen um eine Drehachse drehbar angeordneten Exzenterverbinder mit zumindest einer exzentrisch zur Drehachse verlaufenden Zugfläche für ein Aneinanderziehen und Fixierung der zu verbindenden Wandungsbereiche durch Zusammenwirken des orthogonal zur Fläche hintergreifbaren Kontaktbereichs und der Zugfläche bei Verdrehen des Exzenterverbinders nach Einführen des freien Endes des Kontaktelementes in den Exzenterverbinder aufweist. Die Erfindung betrifft auch ein Gehäuse zur Verwendung als Kanalabschnitt oder als Verkleidung eines Teilbereichs einer raumlufttechnischen Be- und/oder Entlüftungsanlage und/oder einer Entrauchungsanlage, wie zum Beispiel einer Entrauchungsklappe.

## Beschreibung

Die Erfindung betrifft ein Verfahren zur Montage eines Gehäuses zur Verwendung als Kanalabschnitt oder als Verkleidung eines Teilbereichs einer raumlufttechnischen Be- und/oder Entlüftungsanlage und/oder einer Entrauchungsanlage, wie zum Beispiel einer Entrauchungsklappe, aus zumindest zwei miteinander zu verbindenden Wandungsbereichen, wobei jeder Wandungsbereich eine Innenfläche, eine Außenfläche und die Innenfläche und die Außenfläche verbindende Kantenflächen aufweist und wobei im miteinander verbundenen Zustand der beiden Wandungsbereiche diese mit jeweils einer ihrer Flächen stumpf aneinander angrenzen.

Entrauchungsklappen weisen üblicherweise einen aus vier Wandungsbereichen zusammengesetzten Kanalabschnitt auf, in dem drehbar eine Entrauchungsklappe angeordnet ist. Der Antrieb ist außerhalb des Kanalabschnittes montiert und ist von einem als Einhausung ausgebildeten Gehäuse vollständig umgeben. Auch das Gehäuse besteht aus Wandungsbereichen. Bei den Wandungsbereichen von Entrauchungsklappen handelt es sich beispielsweise um Kalzium-Silikat-Platten. Bei einer Art einer bekannten Entrauchungsklappe weist das Gehäuse des Antriebs einen schichtartigen Aufbau auf. So werden die vier die Seiten bildenden Wandungsbereiche aus rahmenartig ausgebildeten Bauplatten gebildet, die um den Antrieb herum schichtenweise aufeinander geklebt werden, bis die gewünschte Höhe erreicht ist. Zuletzt wird als Deckel oberseitig ein Wandungsbereich aufgeschraubt. Dieser schichtartige Aufbau ist konstruktiv aufwendig, da jeder Rahmen einzelnen geschnitten werden muss und anschließend die Rahmen miteinander verklebt werden müssen. Als weiterer Nachteil erweist sich der hohe Materialverlust, der in dem Ausschneiden der Rahmen begründet ist.

Aufgabe der Erfindung ist es, die vorgenannten Nachteile zu vermeiden und ein Verfahren zur Montage eines Gehäuses anzugeben, das einfacher ist und auch einen geringeren Materialverlust hat.

Diese Aufgabe wird dadurch gelöst, dass bei zumindest einer Verbindung einer der beiden zu verbindenden Wandungsbereiche zumindest ein über die stumpf an die Fläche des anderen Wandungsbereichs angrenzende Fläche vorstehendes, insbesondere stiftartig ausgebildetes, Kontaktelement aufweist, das im Bereich seines freien Endes einen orthogonal zu den stumpf aneinander angrenzenden Flächen der zu verbindenden Wandungsbereiche hintergreifbaren Kontaktbereich aufweist, und der andere zu verbindende Wandungsbereich einen um eine Drehachse drehbar angeordneten Exzenterverbinder mit zumindest einer exzentrisch zur Drehachse verlaufenden Zugfläche für ein Aneinanderziehen und ein Fixieren der zu verbindenden Wandungsbereiche durch Zusammenwirken des orthogonal zur Fläche hintergreifbaren Kontaktbereichs und der Zugfläche bei Verdrehen des Exzenterverbinders nach Einführen des freien Endes des Kontaktelementes in den Exzenterverbinder aufweist.

Handelt es sich beispielsweise um einen runden Kanalabschnitt, kann jeder Wandungsbereich halbrund ausgebildet sein. Bei einem solchen Ausführungsbeispiel handelt es sich bei den Flächen um die jeweilige Kantenfläche. So stoßen die beiden Wandungsbereiche mit ihren Kantenflächen aneinander und werden mittels des erfindungsgemäßen Verfahrens aneinander gezogen und fixiert.

Weist der Kanalabschnitt einen viereckigen Querschnitt auf, der aus vier Wandungsbereichen gebildet ist, handelt es sich bei der Fläche des einen Wandungsbereichs um die Kantenfläche und bei der Fläche des anderen Wandungsbereichs üblicherweise um die Innenfläche. Das stiftartig ausgebildete Kontaktelement ist dabei entweder an der Kantenfläche oder an der Innenfläche bzw. an der Außenfläche des einen Wandungsbereichs befestigt, während der Exzenterverbinder so an dem anderen Wandungsbereich angeordnet ist, dass die Drehachse des Exzenterverbinders orthogonal zur Innenfläche bzw. zur Außenfläche des anderen Wandungsbereichs ausgerichtet ist.

Mittels des erfindungsgemäßen Verfahrens ist ein formschlüssiges Zusammenfügen zweier stumpf gestoßener Wandungsbereiche möglich. Die erfindungsgemäße Verbindung ist einfach herstellbar und auch ohne Beschädigung wieder einfach lösbar. Die erfindungsgemäße Verbindung eignet sich besonders für rechtwinklige Verbindungen, d.h. zur Herstellung von Gehäusen mit einem viereckigen Querschnitt, die aus vier Wandungsbereichen zusammengesetzt sind.

Der Exzenterverbinder ist drehbar gegenüber dem den Exzenterverbinder umfassenden Wandungsbereich gelagert und hat zumindest eine exzentrisch zur Drehachse verlaufende Zugfläche. Der Exzenterverbinder kann auch zwei parallel verlaufende Zugflächen aufweisen, die nach Art von zwei Zinken einer Gabel ausgebildet sind. Wird der Exzenterverbinder verdreht, hintergreift jede Zugfläche den Kontaktbereich, so dass die beiden Wandungsbereiche gegeneinander gezogen und damit fixiert werden.

Das Kontaktelement kann beispielsweise in den Wandungsbereich eingegossen sein. Selbstverständlich sind auch andere Befestigungsarten denkbar.

Die Erfindung betrifft auch ein Gehäuse zur Verwendung als Kanalabschnitt oder als Verkleidung eines Teilbereichs einer raumlufttechnischen Be- und/oder Entlüftungsanlage und/oder einer Entrauchungsanlage, wie zum Beispiel einer Entrauchungsklappe, aus zumindest zwei miteinander zu verbindenden Wandungsbereichen, wobei jeder Wandungsbereich eine Innenfläche, eine Außenfläche und die Innenfläche und die Außenfläche verbindende Kantenflächen aufweist und wobei im miteinander verbundenen Zustand der beiden Wandungsbereiche diese mit jeweils einer ihrer Flächen stumpf aneinander angrenzen.

Entrauchungsklappen weisen üblicherweise einen aus vier Wandungsbereichen zusammengesetzten Kanalabschnitt auf, in dem drehbar eine Entrauchungsklappe angeordnet ist. Der Antrieb ist außerhalb des Kanalabschnittes montiert und ist von einem als Einhausung ausgebildeten Gehäuse vollständig umgeben. Auch das Gehäuse besteht aus Wandungsbereichen. Bei den Wandungsbereichen von Entrauchungsklappen handelt es sich beispielsweise um Kalzium-Silikat-Platten.

Bei einer Art einer bekannten Entrauchungsklappe weist das Gehäuse des Antriebs einen schichtarteigen Aufbau auf. So werden die vier die Seiten bildenden Wandungsbereiche aus rahmenartig ausgebildeten Bauplatten gebildet, die um den Antrieb herum schichtenweise aufeinander geklebt werden, bis die gewünschte Höhe erreicht ist. Zuletzt wird als Deckel oberseitig ein Wandungsbereich aufgeschraubt. Dieser schichtartige Aufbau ist konstruktiv aufwendig, da jeder Rahmen einzelnen geschnitten werden muss und anschließend die Rahmen miteinander verklebt werden müssen. Als weiterer Nachteil erweist sich der hohe Materialverlust, der in dem Ausschneiden der Rahmen begründet ist.

Aufgabe der Erfindung ist es, die vorgenannten Nachteile zu vermeiden und ein Gehäuse anzugeben, das konstruktiv einfacher aufgebaut ist und einen geringeren Materialverlust bei der Herstellung der Wandungsbereiche hat.

Diese Aufgabe wird dadurch gelöst, dass bei zumindest einer Verbindung einer der beiden zu verbindenden Wandungsbereiche zumindest ein über die stumpf an die Fläche des anderen Wandungsbereichs angrenzende Fläche vorstehendes, insbesondere stiftartig ausgebildetes, Kontaktelement aufweist, das im Bereich seines freien Endes einen orthogonal zu den stumpf aneinander angrenzenden Flächen der zu verbindenden Wandungsbereiche hintergreifbaren Kontaktbereich aufweist, und der andere zu verbindende Wandungsbereich einen um eine Drehachse drehbar angeordneten Exzenterverbinder mit zumindest einer exzentrisch zur Drehachse verlaufenden Zugfläche für ein Aneinanderziehen und ein Fixieren der zu verbindenden Wandungsbereiche durch Zusammenwirken des orthogonal zur Fläche hintergreifbaren Kontaktbereichs und der Zugfläche bei Verdrehen des Exzenterverbinders nach Einführen des freien Endes des Kontaktelementes in den Exzenterverbinder aufweist.

Handelt es sich beispielsweise um einen runden Kanalabschnitt, kann jeder Wandungsbereich halbrund ausgebildet sein. Bei einem solchen Ausführungsbeispiel handelt es sich bei den Flächen um die jeweilige Kantenfläche. So stoßen die beiden Wandungsbereiche mit ihren Kantenflächen aneinander und werden mittels des erfindungsgemäßen Verfahrens aneinander gezogen und fixiert.

Weist der Kanalabschnitt einen viereckigen Querschnitt auf, der aus vier Wandungsbereichen gebildet ist, handelt es sich bei der Fläche des einen Wandungsbereichs um die Kantenfläche und bei der Fläche des anderen Wandungsbereichs üblicherweise um die Innenfläche. Das stiftartig ausgebildete Kontaktelement ist dabei entweder an der Kantenfläche oder an der Innenfläche bzw. an der Außenfläche des einen Wandungsbereichs befestigt, während der Exzenterverbinder so an dem anderen Wandungsbereich angeordnet ist, dass die Drehachse des Exzenterverbinders orthogonal zur Innenfläche bzw. zur Außenfläche des anderen Wandungsbereichs ausgerichtet ist.

Mittels des erfindungsgemäßen Verfahrens ist ein formschlüssiges Zusammenfügen zweier stumpf gestoßener Wandungsbereiche möglich. Die erfindungsgemäße Verbindung ist einfach herstellbar und auch ohne Beschädigung wieder einfach lösbar. Die erfindungsgemäße Verbindung eignet sich besonders für rechtwinklige Verbindungen, d.h. zur Herstellung von Gehäusen mit einem viereckigen Querschnitt, die aus vier Wandungsbereichen zusammengesetzt sind.

Der Exzenterverbinder ist drehbar gegenüber dem den Exzenterverbinder umfassenden Wandungsbereich gelagert und hat zumindest eine exzentrisch zur Drehachse verlaufende Zugfläche. Der Exzenterverbinder kann auch zwei parallel verlaufende Zugflächen aufweisen, die nach Art von zwei Zinken einer Gabel ausgebildet sind. Wird der Exzenterverbinder verdreht, hintergreift jede Zugfläche den Kontaktbereich, so dass die beiden Wandungsbereiche gegeneinander gezogen und damit fixiert werden.

Das Kontaktelement kann beispielsweise in den Wandungsbereich eingegossen sein. Selbstverständlich sind auch andere Befestigungsarten denkbar.

Das Gehäuse kann beispielsweise quaderförmig ausgebildet sein.

Es bietet sich an, wenn zumindest ein Exzenterverbinder drehbar in einer in dem Wandungsbereich vorgesehenen Ausnehmung angeordnet ist und sich von der angrenzenden Kantenfläche dieses Wandungsbereichs bis in die Ausnehmung eine Durchführung zum Durchführen des freien Endes eines Kontaktelementes erstreckt. Vorzugsweise ist die Ausnehmung derart dimensioniert, dass im eingesetzten Zustand die Oberfläche des Exzenterverbinders bündig mit der Oberfläche der Innenfläche bzw. der Außenfläche des Wandungsbereichs abschließt.

Der Kontaktbereich kann eine parallel zur Fläche des das Kontaktelement aufweisenden Wandungsbereichs umlaufende Kontaktfläche aufweisen.

Es bietet sich an, wenn der die parallel zur Fläche des das Kontaktelement aufweisenden Wandungsbereichs umlaufende Kontaktfläche aufweisende Kontaktbereich im Endbereich des Kontaktelementes angeordnet und als Kopf ausgebildet ist. Bei einer solchen Ausführungsform sind vorteilhafterweise zwei parallel verlaufende Zugflächen nach Art einer Gabel mit Zinken vorgesehen. Die Zugflächen hintergreifen beim Verdrehen den Kopf.

Zumindest ein Wandungsbereich kann als Brandschutzbauplatte oder als zementgebundene Kalzium-Silikat-Platte ausgebildet sein. Selbstverständlich sind auch andere Materialien, die hinreichend hitzebeständig sind und insoweit zur Verwendung bei einer Entrauchungsklappe geeignet sind, denkbar.

Die Dicke zumindest eines Wandungsbereiches kann zwischen 10 mm und 80 mm liegen.

Das Kontaktelement kann an dem dem Kontaktbereich gegenüberliegenden Ende ein Außengewinde, insbesondere ein selbstschneidendes Außengewinde, aufweisen. Auf diese Weise kann das Kontaktelement beispielsweise mittels eines Schraubendrehers in den Wandungsbereich eingeschraubt werden. Ein selbstschneidendes Außengewinde bietet sich insbesondere dann an, wenn der Wandungsbereich aus einem solchen Material besteht, das ein Eindrehen ermöglicht.

Vorzugsweise kann ein Adapter vorgesehen sein, der ein mit dem Außengewinde des Kontaktelementes korrespondierendes Innengewinde und ein Außengewinde, insbesondere ein selbstschneidendes Außengewinde, aufweist.

Um eine definierte Einschraubtiefe des Adapters zu gewährleisten, kann das dem Kontaktelement zugewandte Ende des Adapters als Senkkopf ausgebildet sein.

Das Kontaktelement kann aus einem hitzebeständigen Material, wie zum Beispiel einem Metall oder aus einem hitzebeständigen Kunststoff, bestehen.

Im Folgenden werden in den Zeichnungen dargestellte Ausführungsbeispiele der Erfindung erläutert. Es zeigen:
- Fig. 1a-c: ein erstes Ausführungsbeispiel, das mittels des erfindungsgemäßen Verfahrens miteinander verbundene Wandungsbereiche aufweist,
- Fig. 2a-c: ein zweites Ausführungsbeispiel, das mittels des erfindungsgemäßen Verfahrens miteinander verbundene Wandungsbereiche aufweist,

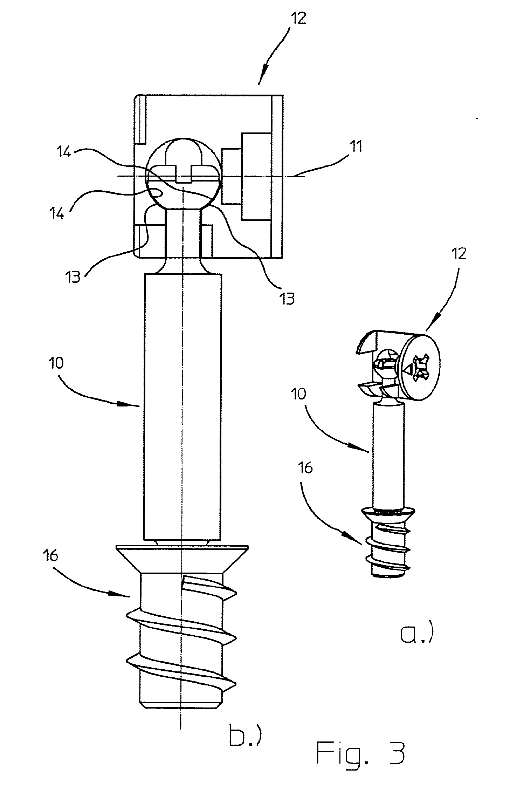

- Fig. 3a und b: ein erfindungsgemäßes Kontaktelement mit Exzenterverbinder und
- Fig. 4a-d: Detailzeichnungen zu dem Kontaktelement und dem Exzenterverbinder.

In allen Figuren werden für gleiche bzw. gleichartige Bauteile übereinstimmende Bezugszeichen verwendet.

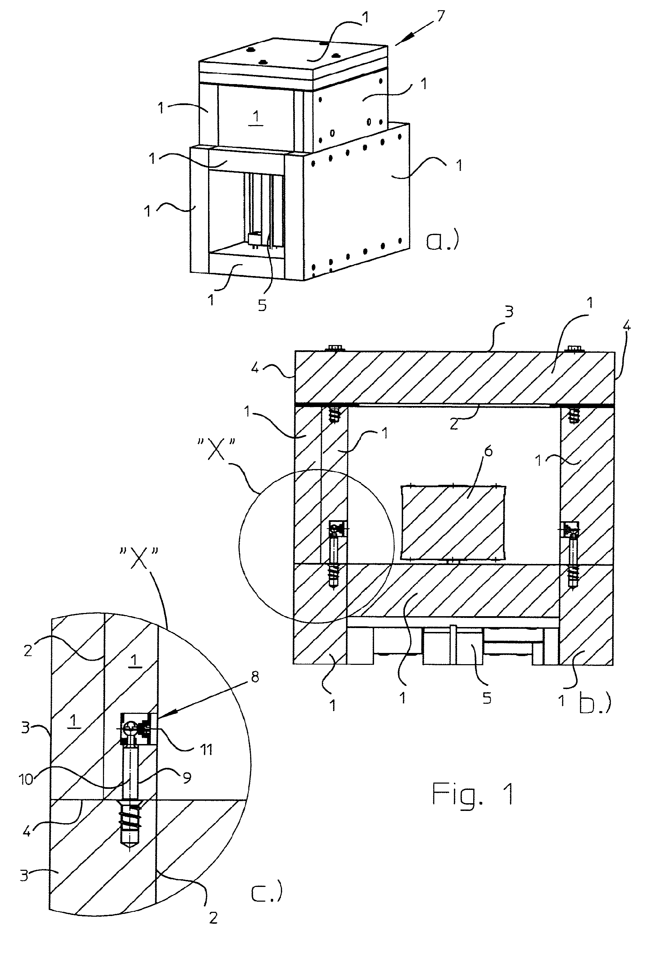

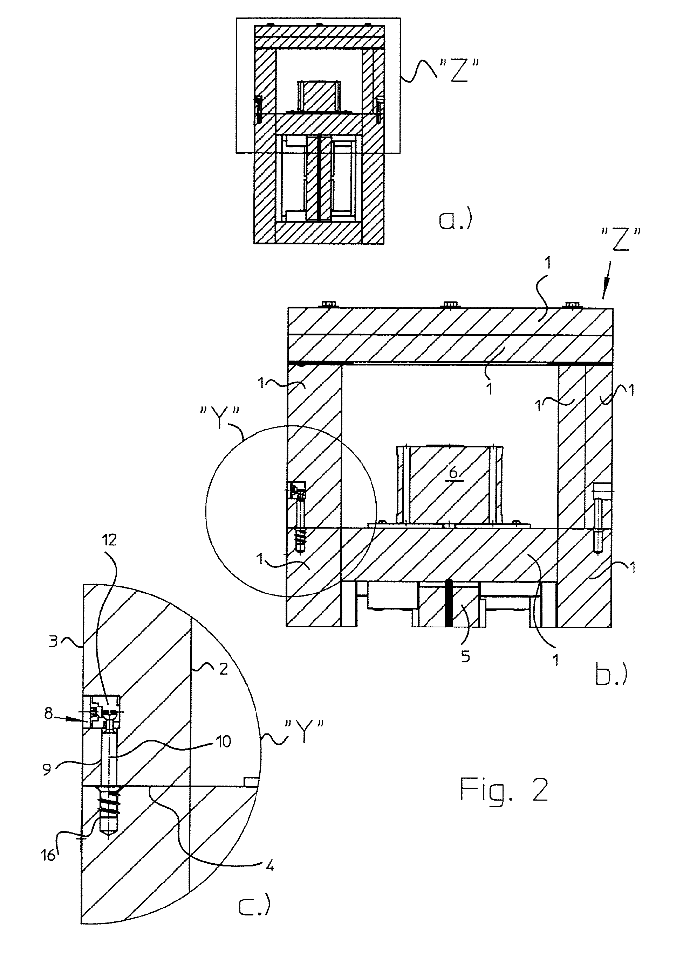

In den Fig. 1 und 2 sind unterschiedliche Ausgestaltungen einer Entrauchungsklappe dargestellt. Die Entrauchungsklappe weist einen Kanalabschnitt auf, der aus vier Wandungsbereichen 1 zusammengesetzt ist. Der Kanalabschnitt bildet einen rechteckigen Strömungsquerschnitt.

Jeder Wandungsbereich 1 weist eine Innenfläche 2 und eine Außenfläche 3 auf. Da vorliegend jeder Wandungsbereich 1 viereckig ausgebildet ist, weist jeder Wandungsbereich 1 vier die Innenfläche 2 und die Außenfläche 3 verbindende Kantenflächen 4 auf.

Im Inneren des Kanalabschnittes ist eine Klappe 5 drehbar angeordnet, die mittels eines außerhalb des Kanalabschnittes angeordneten Antriebs 6 verlagerbar ist. Der Antrieb 6 ist von einem als Einhausung 7 ausgebildeten Gehäuse vollständig umgeben, das insgesamt vier die Seiten bildende Wandungsbereiche 1 und einen den Deckel bildenden Wandungsbereich 1 aufweist. Bei den Wandungsbereichen 1 handelt es sich beispielsweise um Brandschutzbauplatten, die eine Dicke von bis zu 80 mm aufweisen können.

Anhand der vier die Seiten der den Antrieb 6 umschließenden Einhausung 7 wird das erfindungsgemäße Verfahren erläutert. Die Wandungsbereiche 1 sind so untereinander verbunden, dass die zwei aneinandergrenzenden Wandungsbereiche 1 mit jeweils einer ihrer Flächen stumpf aneinander stoßen.

Eine solche Verbindung ist beispielsweis in den Fig. 1b, c sowie 2b, c dargestellt. Hierzu hat einer der beiden Wandungsbereiche 1 im Bereich seiner Innenfläche 2 oder seiner Außenfläche 3 eine Ausnehmung 8. Von der angrenzenden Kantenfläche 4 dieses Wandungsbereichs 1 erstreckt sich zur Ausnehmung 8 eine Durchführung 9 zum Durchführen eines später beschriebenen Kontaktelementes 10.

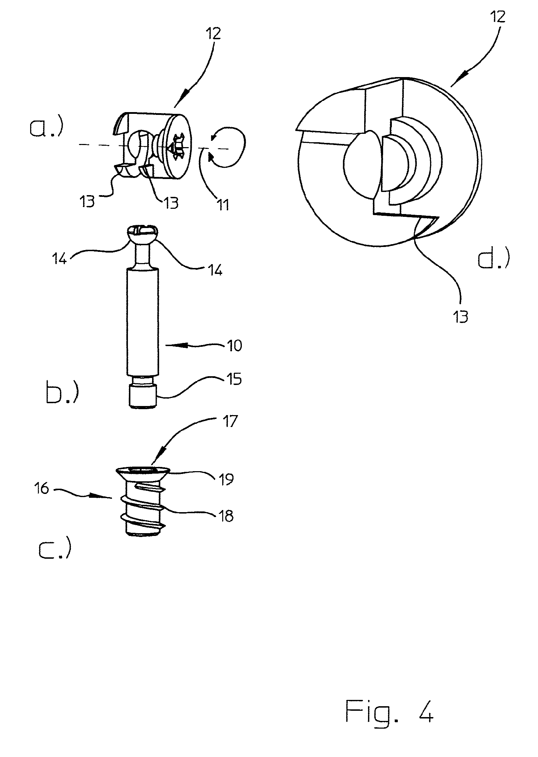

In jeder Ausnehmung 8 ist ein um eine Drehachse 11 drehbar angeordneter Exzenterverbinder 12 angeordnet. Wie beispielsweise Fig. 4a zu entnehmen ist, weist der Exzenterverbinder 12 in dem dargestellten Ausführungsbeispiel zwei parallel ausgerichtete, exzentrisch zur Drehachse 11 verlaufende Zugflächen 13 auf.

Jedem Exzenterverbinder 12 des einen ersten Wandungsbereichs 1 ist in dem Wandungsbereich 1, der mit diesem ersten Wandungsbereich 1 zu verbinden ist, ein stiftartig ausgebildetes Kontaktelement 10 zugeordnet. Bei dem Ausführungsbeispiel nach Fig. 1b ist das Kontaktelement 10 bezogen auf die Dicke des Wandungsbereichs 1 in der Mitte der Kantenfläche 4 des Wandungsbereichs 1 angeordnet.

Das Kontaktelement 10 weist einen Kontaktbereich 14 mit einer parallel zur Fläche des das Kontaktelement 10 aufweisenden Wandungsbereichs 1 umlaufenden Kontaktfläche auf. In den dargestellten Ausführungsbeispielen ist der die parallel zur Fläche des das Kontaktelement 10 aufweisenden Wandungsbereichs 1 umlaufende Kontaktfläche aufweisende Kontaktbereich 14 im Endbereich des Kontaktelementes 10 angeordnet und als Kopf ausgebildet ist.

Die Kontaktfläche des Kontaktbereichs 14 ist orthogonal zu den stumpf aneinander angrenzenden Flächen der zu verbindenden Wandungsbereiche 1 hintergreifbar. Bei der in Detail "X" in Fig. 1c dargestellten Ausgestaltung handelt es sich bei der einen Fläche um die Kantenfläche 4 eines den Kanalabschnitt bildenden Wandungsbereichs 1 und bei der anderen Fläche um die Kantenfläche 4 eines das Gehäuse 7 bildenden Wandungsbereichs 1.

Das Kontaktelement 10 weist an dem dem Kontaktbereich 14 gegenliegenden Ende ein Außengewinde 15 auf. Zusätzlich ist ein Adapter 16 vorgesehen, der ein mit dem Außengewinde 15 des Kontaktelementes 10 korrespondierendes Innengewinde 17 aufweist. Das Kontaktelement 10 ist dabei in den Adapter 16 eingedreht. Zusätzlich weist der Adapter 16 ein selbstschneidendes Außengewinde 18 auf. Mittels dieses Außengewindes 18 ist der Adapter 16 in den Wandungsbereich 1 eingeschraubt. Das dem Kontaktelement 10 zugewandte Ende des Adapters 16 ist als Senkkopf 19 ausgebildet, so dass auf diese Weise eine definierte Einschraubtiefe erreicht wird.

Wie insbesondere Fig. 4a zu entnehmen ist, sind die zwei parallel verlaufenden Zugflächen 13 als eine Art Zinken einer Gabel ausgebildet. Jede Zugfläche 13 verläuft exzentrisch zur Drehachse 11. Der Abstand zwischen der Oberfläche des Wandungsbereichs 1, in den das Kontaktelement 10 befestigt ist, und der umlaufenden Kontaktfläche 14 des Kontaktbereichs 14 ist so gewählt, das im in die Durchführung 9 eingeführten Zustand die Zugflächen 13 des Exzenterverbinders 12 beim Verdrehen des Exzenterverbinders 12 mit dem orthogonal zur Fläche des Wandungsbereichs 1, in dem das Kontaktelement 10 befestigt ist, hintergreifbaren Kontaktflächen 14 des Kontaktbereichs 14 in Kontakt kommen. Bei einem weiteren Verdrehen werden die Wandungsbereiche 1 gegeneinander gezogen und fixiert.

In Fig. 1b sind die Exzenterverbinder 12 so angeordnet, dass sie von außen nicht sichtbar sind, da sie innerhalb der Einhausung 7 angeordnet sind. Der die linke Seite bildende Wandungsbereich 1 besteht dabei aus zwei Wandungsbereichen 1, die sich berühren. Die erfindungsgemäße Verbindung ist in dem inneren Wandungsbereich 1 vorgesehen. Der die rechte Seite bildende Wandungsbereich 1 ist durch einen dicken Wandungsbereich 1 gebildet.

In Fig. 2b ist eine solche Anordnung dargestellt, bei der die Exzenterverbinder 12 von außerhalb der Einhausung 7 sichtbar und damit betätigbar sind. Selbstverständlich ist es auch möglich, dass das Kontaktelement 10 und der Adapter 16 einteilig ausgebildet sind.

## Patentansprüche

1. Verfahren zur Montage eines Gehäuses zur Verwendung als Kanalabschnitt oder als Verkleidung eines Teilbereichs einer raumlufttechnischen Be- und/oder Entlüftungsanlage und/oder einer Entrauchungsanlage, wie zum Beispiel einer Entrauchungsklappe, aus zumindest zwei miteinander zu verbindenden Wandungsbereichen (1), wobei jeder Wandungsbereich (1) eine Innenfläche (2), eine Außenfläche (3) und die Innenfläche (2) und die Außenfläche (3) verbindende Kantenflächen (4) aufweist und wobei im miteinander verbundenen Zustand der beiden Wandungsbereiche (1) diese mit jeweils einer ihrer Flächen stumpf aneinander angrenzen, **dadurch gekennzeichnet, dass** bei zumindest einer Verbindung einer der beiden zu verbindenden Wandungsbereiche (1) zumindest ein über die stumpf an die Fläche des anderen Wandungsbereichs (1) angrenzende Fläche vorstehendes, insbesondere stiftartig ausgebildetes, Kontaktelement (10) aufweist, das im Bereich seines freien Endes einen orthogonal zu den stumpf aneinander angrenzenden Flächen der zu verbindenden Wandungsbereiche (1) hintergreifbaren Kontaktbereich (14) aufweist, und der andere zu verbindende Wandungsbereich (1) einen um eine Drehachse (11) drehbar angeordneten Exzenterverbinder (12) mit zumindest einer exzentrisch zur Drehachse (11) verlaufenden Zugfläche (13) für ein Aneinanderziehen und ein Fixieren der zu verbindenden Wandungsbereiche (1) durch Zusammenwirken des orthogonal zur Fläche hintergreifbaren Kontaktbereichs (14) und der Zugfläche (13) bei Verdrehen des Exzenterverbinders (12) nach Einführen des freien Endes des Kontaktelementes (10) in den Exzenterverbinder (12) aufweist.

2. Gehäuse zur Verwendung als Kanalabschnitt oder als Verkleidung eines Teilbereichs einer raumlufttechnischen Be- und/oder Entlüftungsanlage und/oder einer Entrauchungsanlage, wie zum Beispiel einer Entrauchungsklappe, aus zumindest zwei miteinander zu verbindenden Wandungsbereichen (1), wobei jeder Wandungsbereich (1) eine Innenfläche (2), eine Außenfläche (3) und die Innenfläche (2) und die Außenfläche (3) verbindende Kantenflächen (4) aufweist und wobei im miteinander verbundenen Zustand der beiden Wandungsbereiche (1) diese mit jeweils einer ihrer Flächen stumpf aneinander angrenzen, **dadurch gekennzeichnet, dass** bei zumindest einer Verbindung einer der beiden zu verbindenden Wandungsbereiche (1) zumindest ein über die stumpf an die Fläche des anderen Wandungsbereichs (1) angrenzende Fläche vorstehendes, insbesondere stiftartig ausgebildetes, Kontaktelement (10) aufweist, das im Bereich seines freien Endes einen orthogonal zu den stumpf aneinander angrenzenden Flächen der zu verbindenden Wandungsbereiche (1) hintergreifbaren Kontaktbereich (14) aufweist, und der andere zu verbindende Wandungsbereich (1) einen um eine Drehachse (11) drehbar angeordneten Exzenterverbinder (12) mit zumindest einer exzentrisch zur Drehachse (11) verlaufenden Zugfläche (13) für ein Aneinanderziehen und ein Fixieren der zu verbindenden Wandungsbereiche (1) durch Zusammenwirken des orthogonal zur Fläche hintergreifbaren Kontaktbereichs (14) und der Zugfläche (13) bei Verdrehen des Exzenterverbinders (12) nach Einführen des freien Endes des Kontaktelementes (10) in den Exzenterverbinder (12) aufweist.

3. Gehäuse nach dem vorhergehenden Anspruch, **dadurch gekennzeichnet, dass** das Gehäuse quaderförmig ausgebildet ist.

4. Gehäuse nach den Ansprüchen 2 oder 3, **dadurch gekennzeichnet, dass** zumindest ein Exzenterverbinder (12) drehbar in einer Ausnehmung (8) angeordnet ist und dass sich von der angrenzenden Kantenfläche (4) zur Ausnehmung (8) eine Durchführung (9) erstreckt.

5. Gehäuse nach einem der Ansprüchen 2 bis 4, **dadurch gekennzeichnet, dass** der Kontaktbereich (14) eine parallel zur Fläche des das Kontaktelement (10) aufweisenden Wandungsbereichs (1) umlaufende Kontaktfläche aufweist.

6. Gehäuse nach dem vorhergehenden Anspruch, **dadurch gekennzeichnet, dass** der die parallel zur Fläche des das Kontaktelement (10) aufweisenden Wandungsbereichs (1) umlaufende Kontaktfläche aufweisende Kontaktbereich (14) im Endbereich des Kontaktelementes (10) angeordnet und als Kopf ausgebildet ist.

7. Gehäuse nach einem der Ansprüche 2 bis 6, **dadurch gekennzeichnet, dass** zumindest ein Wandungsbereich (1) als Brandschutzbauplatte oder als zementgebundene Kalzium-Silikat-Platte ausgebildet ist.

8. Gehäuse nach einem der Ansprüche 2 bis 7, **dadurch gekennzeichnet, dass** die Dicke zumindest eines Wandungsbereiches (1) zwischen 10 mm und 80 mm liegt.

9. Gehäuse nach einem der Ansprüche 2 bis 8, **dadurch gekennzeichnet, dass** das Kontaktelement (10) an dem dem Kontaktbereich (14) gegenüberliegenden Ende ein Außengewinde (15), insbesondere ein selbstschneidendes Außengewinde, aufweist.

10. Gehäuse nach dem vorhergehenden Anspruch, **dadurch gekennzeichnet, dass** ein Adapter (16) vorgesehen ist, der ein mit dem Außengewinde (15) des Kontaktelementes (10) korrespondierendes Innengewinde (17) und ein Außengewinde (18), insbesondere ein selbstschneidendes Außengewinde, aufweist.

11. Gehäuse nach dem vorhergehenden Anspruch, **dadurch gekennzeichnet, dass** das dem Kontaktelement (10) zugewandte Ende des Adapters (16) als Senkkopf (19) ausgebildet ist.

12. Gehäuse nach einem der Ansprüche 2 bis 11, **dadurch gekennzeichnet, dass** das Kontaktelement (10) aus einem hitzebeständigen Material, wie zum Beispiel einem Metall oder aus einem hitzebeständigen Kunststoff, besteht.
